# FASCICULE DE BREVET EUROPEEN

(11) **EP 0 629 795 B1**
(45) Date de publication et mention de la délivrance du brevet: **03.12.1997**
(21) Numéro de dépôt: 94401342.4
(22) Date de dépôt: 16.06.1994
(51) Int. Cl.: F16H 57/04, B60K 17/04, B62D 55/125

(54) **Système de refroidissement d'un réducteur à engrenages d'entraînement d'un barbotin de véhicule chenillé ou à roues**
Getriebekühlung für ein Übersetzungsgetriebe, zum Antrieb eines Kettenrades eines Rad- oder Gleiskettenfahrzeugs
Cooling system for a reduction gear for the sprocket wheel of a tracked or wheeled vehicle

(30) Priorité: 18.06.1993 FR 9307384
(43) Date de publication de la demande: 21.12.1994
(73) Titulaire: GIAT Industries, F-78034 Versailles Cédex (FR)
(72) Inventeur: Debret, Patrice, F-78180 Montigny le Bretonneux (FR); Latarche, Daniel, F-91400 Orsay (FR); Le Trouher, Guy, F-94170 Le Perreux sur Marne (FR)

(56) Documents cités:
- DE-A- 3 606 963
- FR-A- 2 139 328
- FR-A- 2 356 535
- FR-A- 2 474 139
- US-A- 1 639 680

## Description

La présente invention concerne un système de refroidissement d'un dispositif de transmission, en particulier d'un réducteur à engrenages d'entraînement d'un barbotin d'un véhicule chenillé ou à roues, le réducteur comprenant un circuit interne de lubrification avec circulation forcée d'un fluide caloporteur.

Dans le cas d'un véhicule chenillé, un barbotin situé à l'avant et/ou à l'arrière du véhicule reçoit son mouvement d'un arbre entraîné en rotation par le groupe moto-propulseur du véhicule, et il engrène sur une chenille pour provoquer le déplacement du véhicule. Concrètement, ce barbotin est entraîné en rotation par l'intermédiaire d'un réducteur à engrenages monté entre un arbre de sortie du groupe moto-propulseur et le moyeu du barbotin.

Le brevet FR-A-2 356 535 divulgue un système de refroidissement d'un moyeu de barbotin d'un véhicule chenillé en faisant circuler de l'huile de graissage au niveau d'une surface d'échange thermique additionnelle, l'ensemble étant situé dans le moyeu. Aucune autre surface de contact n'est prévue entre le fluide et le moyeu à l'exception de la surface additionnelle elle-même.

Le brevet DE-A-3 606 963 décrit un mécanisme de refroidissement pour un moteur hydraulique, fermé par un carter renfermant l'huile auquel on adjoint une paroi munie d'ailettes délimitant un espace intermédiaire. La structure décrite est peu claire, mais il s'agit d'un moteur hydraulique dont l'huile doit être refroidie de façon intensive.

D'une manière générale, la puissance dissipée à l'intérieur d'un réducteur sous forme de chaleur est évacuée par les surfaces externes du réducteur, sans aménagement particulier, l'architecture du réducteur étant globalement suffisante pour assurer cette dissipation.

Cependant, dans certaines conditions d'utilisation du véhicule, il est souhaitable d'augmenter le refroidissement du réducteur, par exemple en raison d'une température extérieure élevée et/ou d'une utilisation intensive du véhicule.

L'invention a pour but d'apporter une solution simple, efficace et peu coûteuse à ce problème.

A cet effet, l'invention propose un système de refroidissement d'un réducteur à engrenages d'entraînement d'un moyeu de barbotin de véhicule chenillé ou à roues, le réducteur comprenant un circuit interne de lubrification forcée d'un fluide caloporteur, le système comprenant au moins une première surface d'échange thermique additionnelle intégrée dans le moyeu et des moyens pour canaliser le fluide caloporteur entre le circuit interne et ladite première surface d'échange thermique additionnelle, caractérisé en ce que lesdits moyens pour canaliser le fluide caloporteur entre le circuit interne et ladite première surface d'échange thermique additionnelle comprennent des canalisations permettant une circulation du fluide à l'intérieur du moyeu pour augmenter ainsi la surface de contact entre le fluide et le moyeu.

Le système selon l'invention permet ainsi d'améliorer de manière sensible la dissipation de l'énergie thermique produite par le réducteur, c'est-à-dire d'augmenter le coefficient d'échange thermique entre le fluide caloporteur circulant dans le circuit de lubrification du réducteur et le milieu extérieur.

Selon une autre caractéristique de l'invention la première surface d'échange thermique additionnelle est constituée par des premiers canaux internes à la surface périphérique interne du moyeu.

Dans un exemple de réalisation, le système comprend une deuxième surface d'échange thermique additionnelle constituée par des deuxièmes canaux internes d'un radiateur fixé à l'élément du réducteur solidaire du moyeu et mis en communication avec le circuit de lubrification du réducteur.

En variante et selon une autre caractéristique de l'invention, les premiers canaux et/ou les deuxièmes canaux internes sont constitués par gorges annulaires, un filetage, des cannelures ou analogues.

D'une manière avantageuse, la surface externe du radiateur est équipée d'ailettes pouvant être disposées dans un plan perpendiculaire à l'axe de rotation du barbotin ou dans un plan passant par ledit axe.

Le système de refroidissement selon l'invention présente notamment l'avantage de ne nécessiter que quelques opérations d'usinage lorsque la surface d'échange thermique additionnelle est intégrée dans le moyeu du barbotin, et n'implique pas de problèmes particuliers au niveau des moyens d'étanchéité à prévoir entre le réducteur, le moyeu du barbotin et/ou le radiateur, étant donné que toutes ces pièces sont solidaires en rotation.

Selon un autre avantage de l'invention, l'utilisation d'un véhicule chenillé ou à roues équipé d'un tel système de refroidissement est mieux adapté aux conditions climatiques que l'on rencontre dans des régions désertiques, semi-désertiques ou tropicales.

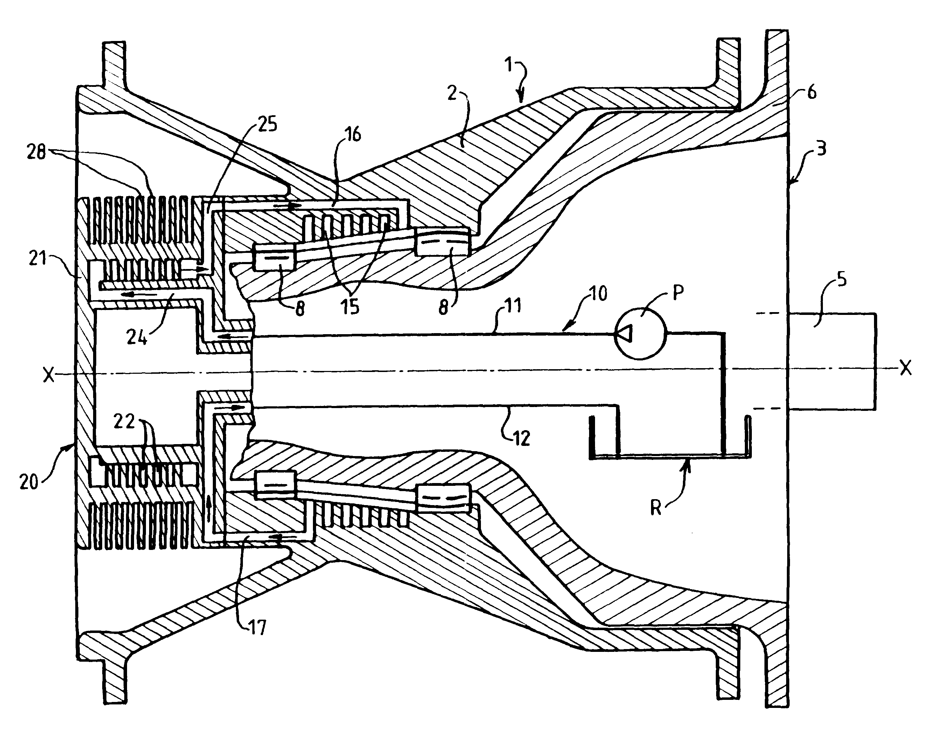

D'autres avantages, caractéristiques et détails de l'invention ressortiront de la description explicative qui va suivre faite en référence au dessin annexé, qui est une vue en coupe axiale schématique et partielle d'un réducteur à engrenages d'entraînement d'un barbotin équipé d'un système de refroidissement selon l'invention.

Sur ce dessin, la référence 1 désigne un barbotin situé à l'anvant et/ou à l'arrière d'un véhicule chenillé (non représenté) qui engrène sur une chenille (non représentée) pour assurer le déplacement du véhicule.

De façon classique, le barbotin 1 comprend notamment un moyeu 2 qui est entraîné en rotation autour de son axe longitudinal X-X par un réducteur 3 à engrenages, par exemple du type épicycloïdal. Le réducteur 3 comprend notamment un arbre d'entrée 5 entraîné en rotation autour de l'axe X-X par un organe moteur, des pignons satellites (non représentés) interposés entre un pignon planétaire entraîné par l'arbre 5 et une grande couronne 6 fixe en rotation et supportant le moyeu 2 du barbotin 1 par l'intermédiaire de roulements 8.

Le réducteur 3 comprend de façon connue en soi, un circuit interne 10 de lubrification avec circulation forcée d'un fluide caloporteur tel que de l'huile. Plus précisément, ce circuit 10 comprend un conduit aller 11 et un conduit retour 12 branchés sur un réservoir R de liquide caloporteur, avec interposition d'une pompe P pour assurer une circulation forcée du fluide dans les conduits aller 11 11 et retour 12.

Selon l'invention, il est prévu au moins une surface d'échange thermique additionnelle, qui est mise au contact du fluide caloporteur circulant dans le circuit interne 10 de lubrification du réducteur 3, et qui est située à l'intérieur de l'ensemble réducteur 3-moyeu 2.

Dans l'exemple de réalisation illustré sur le dessin annexé, la surface d'échange thermique additionnelle se décompose en trois surfaces dont les effets se cumulent et que l'on peut utiliser en combinaison.

Une première surface d'échange thermique additionnelle est intégrée dans le moyeu 2 du barbotin 1, et elle est définie par des canaux internes 15 qui sont par exemple constitués par des gorges annulaires usinées du côté de la surface périphérique interne du moyeu 2. Ces canaux 15 communiquent avec le circuit interne 10 par un conduit d'entrée 16 et un conduit de sortie 17, pour permettre une circulation du fluide de lubrification à l'intérieur du moyeu 2. Les canaux 15 constituent des moyens qui permettent d'augmenter la surface de contact entre le fluide de lubrification et le moyeu 2. Les conduits 16 et 17 sont par exemple usinés parallèlement à l'axe de rotation X-X du barbotin 1.

Une seconde surface d'échange thermique additionnelle est constituée au moyen d'un radiateur 20 fixé au réducteur 3 sur le côté externe de celui-ci qui correspond au côté extérieur du véhicule, le radiateur 20 étant par exemple axialement aligné suivant l'axe X-X de rotation du barbotin 1. Le corps 21 du radiateur 20 comporte des canaux internes 22 qui sont constitués par des gorges annulaires par exemple, pour augmenter la surface de contact avec le fluide de lubrification. Ces canaux 22 communiquent avec le circuit interne 10 par un conduit d'entrée 24 et un conduit de sortie 25, pour permettre une circulation du fluide de lubrification à l'intérieur du radiateur 20.

Une troisième surface d'échange thermique additionnelle est constituée par des ailettes de refroidissement 28 qui équipent la surface externe du radiateur 20, ces ailettes 28 étant par exemple disposées ou orientées dans un plan perpendiculaire à l'axe de rotation X-X du barbotin 1.

Pour que le fluide caloporteur de lubrification du réducteur 3 circulant dans les conduits aller 11 et retour 12 puisse être refroidi par la surface d'échange thermique additionnelle intégrée dans le moyeu 2 du barbotin 1 et par la surface d'échange thermique additionnelle constituée par le radiateur 20 et ses ailettes 28, on réalise une liaison étanche de fluide entre :
- le conduit aller 11 du circuit 10 de lubrification et le conduit d'entrée 24 du réservoir 20,
- le conduit de sortie 25 du réservoir 20 et le conduit d'entrée 16 du moyeu 2, et
- le conduit de sortie 17 du moyeu 2 et le conduit de retour 12 du circuit 10 de lubrification, ce conduit de sortie 17 passant dans le corps 21 du réservoir 20.

Ces liaisons étanches de fluide entre les conduits précités ne posent pas de problèmes particuliers et peuvent être obtenues par des moyens classiques, étant donné que le moyeu 2, le réducteur 3 et le radiateur 20 sont solidaires en rotation autour de l'axe X-X.

Ainsi, on a réalisé un circuit 10 de lubrification qui, à partir de la pompe P, traverse le radiateur 20 et le moyeu 2 avant de retourner au réservoir R, le fluide étant refroidi par l'action combinée des surfaces d'échange thermique additionnelles constituées par le radiateur 20 et ses ailettes 28, et le moyeu 2 en considérant le sens de circulation du fluide de lubrification.

Bien entendu, la circulation forcée du fluide de lubrification est calculée de façon à avoir un écoulement fluidique le plus favorable à l'échange thermique avec l'air ambiant.

En variante, le système de refroidissement peut ne comporter qu'une surface d'échange thermique additionnelle, par exemple celle constituée par le moyen 2 du barbotin 1 ou celle constituée par le radiateur 20 équipé ou non d'ailettes 28.

Dans le cas où la surface d'échange thermique additionnelle est limitée au moyeu 2 du barbotin 1, les conduits aller 11 et retour 12 du circuit de lubrification 10 sont directement reliés aux conduits aller 16 et retour 17 du moyeu 2, respectivement.

Dans le cas où la surface d'échange thermique additionnelle est limitée à l'utilisation du radiateur 20, les conduits aller 11 et retour 12 du circuit de lubrification 10 sont directement reliés aux conduits d'entrée 24 et de sortie 25 du radiateur 20, respectivement.

Dans l'exemple illustré sur le dessin, les ailettes 28 du radiateur 20 sont disposées perpendiculairement à l'axe de rotation X-X du barbotin 1, mais elles peuvent être également disposées dans un plan passant par cet axe X-X.

Enfin, les canaux 15 et 22 prévus dans le moyeu 2 et dans le réservoir 20 peuvent être réalisés par des cannelures, des filetages ou analogues, ces canaux étant des moyens qui permettent d'augmenter la surface de contact entre le fluide de lubrification, le moyeu et/ou le radiateur afin d'améliorer le refroidissement dudit fluide.

## Revendications

1. Système de refroidissement d'un réducteur (3) à engrenages d'entraînement d'un moyeu (2) de barbotin (1) de véhicule chenillé ou à roues, le réducteur (3) comprenant un circuit interne (10) de lubrification forcée d'un fluide caloporteur, le système comprenant au moins une première surface d'échange thermique additionnelle (15) intégrée dans le moyeu (2) et des moyens (16, 17) pour canaliser le fluide caloporteur entre le circuit interne (1) et ladite première surface d'échange thermique additionnelle (15), **caractérisé** en ce que lesdits moyens pour canaliser le fluide caloporteur entre le circuit interne et ladite première surface d'échange thermique additionnelle (15) comprennent des canalisations (16, 17) permettant une circulation du fluide à l'intérieur du moyeu (2) pour augmenter ainsi la surface de contact entre le fluide et le moyeu (2).

2. Système de refroidissement selon la revendication 1, caractérisé en ce que la première surface d'échange thermique additionnelle (15) est constituée par des premiers canaux internes à la surface périphérique interne du moyeu (2).

3. Système de refroidissement selon la revendication 1 ou 2, caractérisé en ce qu'il comprend une deuxième surface d'échange thermique additionnelle (22) constituée par des deuxièmes canaux internes d'un radiateur (20) fixé à l'élément du réducteur (3) solidaire du moyeu (2) et mis en communication avec le circuit (10) de lubrification du réducteur (3).

4. Système de refroidissement selon l'une des revendications 2 ou 3, caractérisé en ce que les premiers canaux et/ou les deuxièmes canaux internes (15, 22) sont constitués par gorges annulaires, un filetage, des cannelures ou analogues.

5. Système de refroidissement selon la revendication 3, caractérisé en ce que la surface externe du radiateur (20) est équipée d'ailettes (28).

6. Système de refroidissement selon la revendication 5, caractérisé en ce que les ailettes (28) sont orientées dans un plan perpendiculaire à l'axe de rotation du barbotin (1).

7. Système de refroidissement selon la revendication 6, caractérisé en ce que les ailettes (28) sont orientées dans un plan passant par l'axe de rotation du barbotin (1).

## Patentansprüche

1. Kühlsystem eines Getriebes (3) mit Antriebsrädern für eine Nabe (2) eines Kettenrads (1) eines Raupen- oder Radfahrzeugs, bei dem das Getriebe (3) einen internen Kreislauf (10) zur forcierten Schmierung eines Kühlmittels umfaßt, wobei das System mindestens eine erste zusätzliche Wärmeaustauschoberfläche (15) aufweist, die in die Nabe (2) integriert ist, sowie Mittel (16, 17), um das Kühlmittel zwischen dem internen Kreislauf (10) und besagter erster zusätzlicher Wärmeaustauschoberfläche (15) zu kanalisieren, **gekennzeichnet** dadurch, daß besagte Mittel zum Kanalisieren des Kühlmittels zwischen dem internen Kreislauf und besagter erster zusätzlicher Wärmeaustauschoberfläche (15) Kanalisationen (16, 17) aufweisen, die einen Umlauf des Mediums im Inneren der Nabe (2) erlauben, um dadurch die Berührungsoberfläche zwischen dem Medium und der Nabe (2) zu steigern.

2. Kühlsystem gemäß dem Anspruch 1, gekennzeichnet dadurch, daß die erste zusätzliche Wärmeaustauschoberfläche (15) aus den ersten internen Kanälen auf der peripheren inneren Oberfläche der Nabe (2) bestehen.

3. Kühlsystem gemäß dem Anspruch 1 oder 2, gekennzeichnet dadurch, daß es eine zweite zusätzliche Wärmeaustauschoberfläche (22) umfaßt, die aus den zweiten internen Kanälen eines Radiators (20) besteht, der am Element des Getriebes (3) befestigt ist, das fest mit der Nabe (2) verbunden ist und der mit dem Kreislauf (10) zur Schmierung des Getriebes (3) verbunden ist.

4. Kühlsystem gemäß einem der Ansprüche 2 oder 3, gekennzeichnet dadurch, daß die ersten und / oder die zweiten internen Kanäle (15, 22) aus Ringhohlkehlen, einem Gewinde, Riffelungen oder ähnlichem bestehen.

5. Kühlsystem gemäß dem Anspruch 3, gekennzeichnet dadurch, daß die äußere Oberfläche des Radiators (20) mit Rippen (28) ausgestattet ist.

6. Kühlsystem gemäß dem Anspruch 5, gekennzeichnet dadurch, daß die Rippen (28) in einer Ebene senkrecht zur Drehachse des Kettenrads (1) angeordnet sind.

7. Kühlsystem gemäß dem Anspruch 6, gekennzeichnet dadurch, daß die Rippen (28) in einer Ebene angeordnet sind, die durch die Drehachse des Kettenrads (1) verläuft.

## Claims

1. A cooling system for a reduction gear (3) which drives a sprocket wheel (1) hub (2) of a tracked or wheeled vehicle, the reduction gear (3) comprising an internal forced lubricating circuit (10) for a coolant fluid, the system comprising at least a first additional heat exchange surface (15) integrated into the hub (2) and means (16, 17) to channel the coolant fluid between the internal circuit (10) and said first additional heat exchange surface (15), ***characterized in that*** said means to channel the coolant fluid between the internal circuit and said first additional heat exchange surface (15) comprise piping (16, 17) enabling the fluid to circulate inside the hub (2) thereby increasing the contact surface between the fluid and the hub (2).

2. A cooling system according to Claim 1, characterized in that the first additional heat exchange surface (15) is formed by first internal ducts on the internal peripheral surface of the hub (2).

3. A cooling system according to Claims 1 or 2, characterized in that it comprises a second additional heat exchange surface (22) formed by second internal ducts of a radiator (20) attached to the reduction element (3) integral with the hub (2) and communicating with the lubricating circuit (10) of the reduction gear (3).

4. A cooling system according to one of Claims 2 or 3, characterized in that the first internal ducts and/or the second internal ducts (15, 22) are formed by ring-shaped grooves, a threading, and ribs or analogous devices.

5. A cooling system according to Claim 3, characterized in that the external surface of the radiator (20) is fitted with fins (28).

6. A cooling system according to Claim 5, characterized in that the fins (28) are arranged in a perpendicular plane to the rotational axis of the sprocket wheel (1).

7. A cooling system according to Claim 6, characterized in that the fins (28) are arranged in a plane passing by the rotational axis of the sprocket wheel (1).
